# EUROPEAN PATENT SPECIFICATION

(11) **EP 3 941 719 B1**
(45) Date of publication and mention of the grant of the patent: **09.07.2025**
(21) Application number: 19947351.3
(22) Date of filing: 26.09.2019
(51) Int. Cl.: B29C 64/20, B29C 64/165, B29C 64/295, B29C 64/393, B29C 64/255, B29C 64/364, B22F 12/17, B22F 10/85, B22F 10/14, B22F 10/37, B22F 10/50, B33Y 50/02, B33Y 40/00, B33Y 10/00, B33Y 30/00

(54) **3D PRINTING SYSTEM AND METHOD OF CONTROL.**
3D DRUCKSYSTEM UND STEUERUNGSVERFAHREN.
SYSTÈME DE IMPRESSION 3D ET MÉTHODE DE CONTROL.

(43) Date of publication of application: 26.01.2022
(73) Proprietor: Peridot Print LLC, Palo Alto, CA 94304 (US)
(72) Inventor: CULUBRET CORTADA, Sergi, 08174 Sant Cugat del Valles (ES); PUIGARDEU ARAMENDIA, Sergio, 08174 Sant Cugat del Valles (ES); HOWER, Jason C., Corvallis, OR 97330 (US); VICTORIO FERRER, Juan Antonio, 08174 Sant Cugat del Valles (ES); SOLE PONS, Macia, Corvallis, OR 97330-4241 (US)
(74) Representative: Haseltine Lake Kempner LLP
(86) International application number: PCT/US2019/053098
(87) International publication number: WO 2021/061125

(56) References cited:
- WO-A1-2019/143346
- WO-A1-2020/237161
- WO-A1-2020/237163
- WO-A2-2020/237165
- WO-A2-2020/237166
- RU-U1- 184 284
- US-A1- 2017 355 137
- US-A1- 2018 141 271
- US-A1- 2019 017 886
- US-B2- 10 067 499

## Description

### BACKGROUND

There exist a multitude of kinds of three-dimensional (3D) printing techniques that allow the generation of 3D objects through selective solidification of a build material based on a 3D object model.

One technique forms successive layers of a powdered or granular build material on a build platform in a build chamber, and selectively applies a thermally curable binder agent on regions of each layer that are to form part of the 3D object being generated. The thermally curable binder agent has to be thermally cured to form a sufficiently strong green part that may be removed from the build chamber, cleaned up, and then sintered in a sintering furnace to form the final 3D object.

WO2020/237163 A1 discloses a build receptacle that comprises a housing comprising a sidewall at least partially enclosing a build chamber. A build platform positioned within the build chamber. A position of the build platform being slidably adjustable within the build chamber in a vertical direction from a lower position to one of a plurality of upper positions and from the one of the plurality of upper positions to the lower position. The build receptacle further comprises a plurality of heating elements disposed around the build chamber. This document is prior art under Article 54(3) EPC.

WO2020/237161 A1 discloses an additive manufacturing apparatus that includes a recoat head for distributing build material in a build area, a print head for depositing material in the build area, one or more actuators for moving the recoat head and the print head relative to the build area, and a cleaning station for cleaning the print head. This document is prior art under Article 54(3) EPC.

WO2020/237166 A2 discloses an actuator assembly for distributing build material and depositing binder material in an additive manufacturing apparatus. This document is prior art under Article 54(3) EPC.

WO2020/237165 A2 discloses an additive manufacturing apparatus that comprises a support chassis including a print bay, a build bay, and a material supply bay. This document is prior art under Article 54(3) EPC.

US2018/141271 A1 discloses a binder system and a material system for producing components using layering technology, wherein the temperature in the building space and/or in the applied material is set to at least 70° C. and maintained for at least 2 hours. Areas on which binder has been selectively applied, solidify, and form the component.

US2017/355137 A1 discloses a method and an apparatus for producing three-dimensional models by layering in a high-speed sintering process.

### BRIEF DESCRIPTION

Examples will now be described, by way of non-limiting example only, with reference to the accompanying drawings, in which:
Figure 1 shows a cross-section of simplified illustration of a 3D printing system 100 according to one example;
Figure 2 is a flow diagram outlining an example method of operating a 3D printing system according to one example;
Figure 3 shows a cross-section of simplified illustration of a 3D printing system 100 according to one example;
Figure 4 shows a cross-section of simplified illustration of a 3D printing system 100 according to one example; and
Figure 5 shows a cross-section of simplified illustration of a 3D printing system 100 according to one example.

### DETAILED DESCRIPTION

Some powder-based 3D printing techniques use a binder agent to form a so-called green part by selectively applying a liquid binder agent on successively formed layers of a build material, such as a metal, ceramic, or plastic powder, and subsequently curing the binder agent. Curing of the binder agent creates a relatively weak matrix of build material particles bound together by the cured binder. When a 3D object is generated in this manner, the 3D object is commonly referred to as a green part. A green part generated with powdered metal or ceramic build material, for example, has to be sintered in a sintering furnace to transform the green part into a highly dense final object.

If a thermally curable binder agent, such as a latex-based binder agent, is used to generate a green part, the build material on which the binder agent is applied has to be heated to a suitable temperature to cure the binder agent. For example, if a latex-based binder agent is used, the build material on which the binder agent is applied may have to be heated to a temperature above 100 degrees Celsius, for example above 120, or above 150 degrees Celsius. However, if the binder curing temperature is close to, or is higher than, the boiling point of carrier liquids in the binder agent this makes it unsuitable to thermally cure each layer after application of binder agent. This is because printing binder agent on a layer of build material at a temperature above the boiling point of carrier fluids in the binder agent would cause, upon printing, rapid evaporation or boiling of liquid carriers, which can disturb the formed layer of build material. This can, for example, cause build material to become airborne which may contaminate printheads and other parts of a 3D printer and may also cause defects in the powder layer and ultimately in the green part. In one example the boiling point of carrier fluids of a water-based binder agent may be around 100 degrees Celsius.

Current techniques separate printing of thermally curable binder agent and thermal curing of thermally curable binder agent into separate and sequentially performed processes, whereby binder agent is selectively printed in successive layers of build material based on a 3D object model, and all of the layers are subsequently heated up to the binder curing temperature during a single curing process.

The present disclosure describes examples of a 3D printing system in which the process of printing a thermally curable binder agent on successively formed layers of a build material and the process of curing the binder agent may be performed, at least partially, in parallel. Such a system may substantially reduce the amount of time it takes to generate green parts ready for sintering.

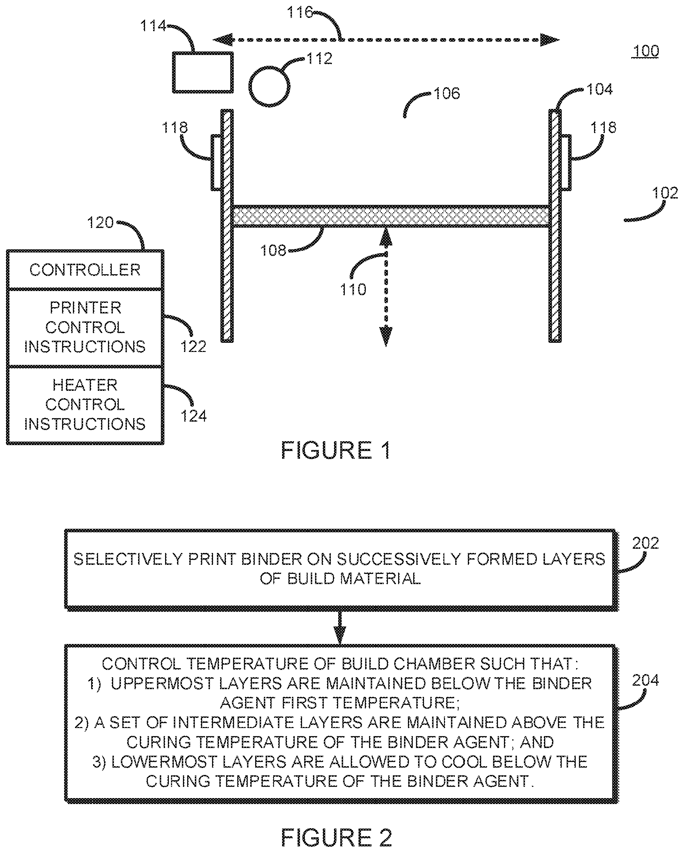

Referring now to Figure 1 there is shown a cross-section of simplified illustration of a 3D printing system 100 according to one example. The printing system 100 comprises a build unit 102 which is an integral part of the printing system 100. In another example, the build unit 102 is a removable module that may be inserted into a suitable interface (not shown) in the printing system 100.

The build unit 102 comprises sidewalls 104 which form a build chamber 106 in which 3D objects may be generated by the printing system 100. In one example the build chamber 106 has a generally open-top cuboidal shape. The base of the build unit 102 is provided by a movable build platform 108 on which successive layers of build material may be formed and have binder agent selectively applied, for example by printing, thereon. The build platform 108 is movable in a generally vertical axis, or z-axis, (110) by a controllable drive module (not shown). The build platform 108 may initially be positioned just below the top of the build chamber 106 at a distance corresponding to the height of the first layer of build material to formed thereon. The build platform 108 may be successively lowered by a height corresponding to the height of each subsequent layer of build material to be formed to allow successive layers of build material to be formed thereon.

Layers of a suitable build material, such as a powdered metal, plastic, or ceramic, build material, may be formed on the build platform 108, or on previously formed layers, by a layer formation device 112. In one example, the layer formation device 112 is a translatable recoater roller or wiper blade, although in other examples the layer formation device 112 may comprise a build material deposition device, such as a hopper, a sprinkler, or the like. A binder agent, such as a thermally curable binder agent, may be selectively applied to each formed layer of build material by a controllable agent deposition device 114, such as a thermal or a piezo printhead. Binder agent may be stored in a binder agent storage container (not shown) that is fluidically coupled to the agent deposition device 114. Both the layer formation device 112 and the agent deposition device 114 are translatable over the build platform 108 in an axis 116.

A controllable heating element 118, such as a resistive heater, is provided to apply heat to a portion of the build chamber 118. As illustrated in Figure 1 the heating element 118 is positioned a predetermined distance below the top of the build chamber 106. In one example the heating element 118 is disposed around all, or substantially all, of the periphery of a portion of the build chamber 106. In one example the heating element 118 may comprise multiple heating elements arranged and controllable to act in one example as a single heating element, and in another example to act as multiple independently controllable heating elements. The predetermined distance at which the heating element 118 is positioned may be, in one example, between about 5 and 20 cm below the top of the build unit, although in other examples the distance may be a greater or lesser distance. The heating element 118 may, in one example, be a thermal blanket, and may, comprise one or multiple heating elements, coils, or the like, that are to generate heat when electrically powered. In one example, the heating element 118 has a height of between about 10 to 30 cm, although in other examples it may have a higher or lower height. In one example, the heating element is configured to apply a substantially uniform amount of heat around the portion of the periphery of the build chamber to which the heating element is in thermal contact with.

The operation of the printing system 100 is generally controlled by a controller 120, as will be described in greater detail below. The controller 120 may comprise a processor, such as a microprocessor, microcontroller, or the like. The controller 120 is coupled to a memory in which are stored processor executable printer control instructions 122, and processor executable heater control instructions.

When executed by the controller 120, the printer control instructions 122 cause the controller to control the height of the build platform 108, to control the layer formation device 112 to form a layer of build material on the build platform, and control the agent deposition device 114 to selectively apply binder agent to the formed layer of build material in accordance with data derived from a 3D object model of the object to be generated.

When executed by the controller 120, the heater control instructions 124 cause the controller to control the heating element 118, as described below, to apply heat to a portion of the build chamber 106 to cure binder agent in a portion of build chamber 106 whilst other layers of build material may be formed and have binder agent printed thereon. In this way, curing of binder agent may be performed within the build unit 100, which may help significantly speed up the generated of green parts, compared to performing curing as a separate process after the printing of binder agent.

In one example, the printer control instructions 122 and the heater control instructions 124 may be executed in parallel.

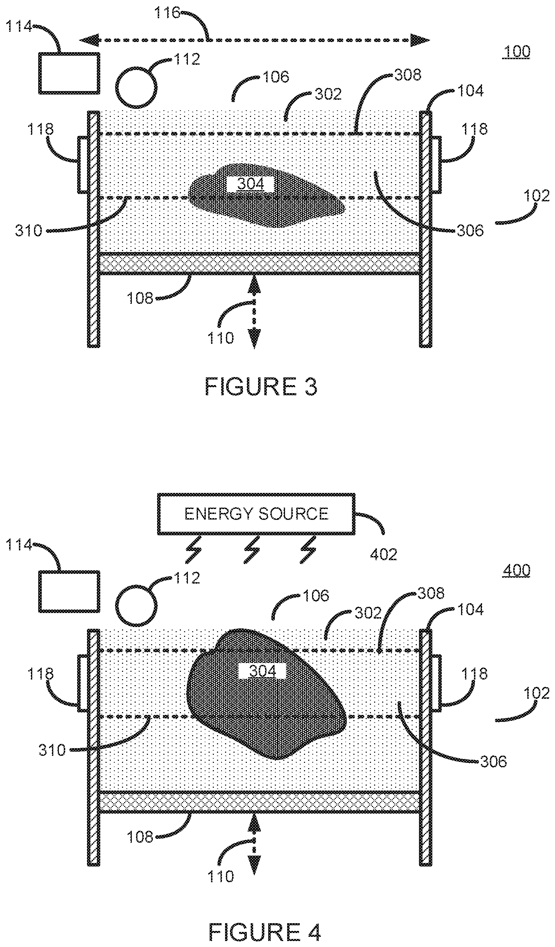

An example of operating the system 100 will now be described with reference to the flow diagram of Figure 2, and Figure 3.

At block 202, the controller 120 executes the printer control instructions 122 to control elements of the printing system 100 to selectively form layers of build material on the build platform 108 and selectively print binder agent 304 on each formed layer. The selective printing of binder agent 304 may be performed based on data derived from a 3D object model, for example based on a layer of a 3D object to be generated. For example, a 3D object model may be sliced, and each slice may define portions of each layer of build material that is to receive binder agent such that they ultimately form a solid portion the 3D object to be generated.

At block 204, the controller 120 executes the heater control instructions 124 to control the heating element 118 to apply heat to a portion of the contents of the build chamber 106 in a curing zone 306 delimited by dotted lines 308 and 310. The design of the build unit 100 and the position of the heating element 118 provide the following general conditions within the build unit, as illustrated in Figure 3:
a. Layers of build material above the curing zone 306 are maintained at a temperature below a first predetermined printing temperature. In one example the printing temperature is a temperature below the boiling point of carrier fluids within the binder agent. This ensures good printing conditions on the upper layers of build material. In one example the printing temperature is about 10, or about 20, or about 30, or 40 degrees Celsius below the boiling point of carrier fluids within the binder agent.
b. Layers within the curing zone 306 are maintained at a temperature at or above the curing temperature of the binder agent. Thus, any binder agent in the curing zone 306 will be thermally cured. In one example the curing temperature is about 100, or about 120, or about 140, or about 160 degrees Celsius depending on the type of binder agent used.
c. Layers below the curing zone 306 are allowed to cool below the curing temperature of the binder agent.

The number of upper layers that are to be maintained at or below the printing temperature may be chosen to take into account the penetration of binder agent into previously formed layers. For example, if the binder agent is susceptible of penetrating into two previously formed layers, then the temperature of all of these layers should be maintained below the first predetermined temperature. However, due to difficulties in precisely determining and/or controlling the temperature of layers above the curing zone 306, in one example the number of layers that are to be maintained below the printing temperature may incorporate a suitable number of buffer layers, for example 10, 50, 100, or 200 buffer layers.

Figure 3 shows a simplified schematic illustration of the curing zone 306 having a clearly delimited upper and lower horizontal boundaries. However, it will be appreciated that, in use, heat will radiate and/or conduct form one layer to another leading to a more complex thermal pattern. However, by positioning the heating element 118 at a suitable position within the build unit 102 the above-mentioned temperature zones can be obtained at least for a portion of the layers of build material therein. Consequently, in use there may be an intermediate zone (not shown) between the curing zone 306 and below the upper layer(s) of build material within which the temperature of build material may be below the curing temperature but above the boiling point of binder agent carrier fluids. In one example the intermediate zone may not be heated directly from a heating element but may, for example, be heated due to radiative and/or conductive heating from heated build material. Binder agent in the intermediate zone may start to dry without curing, for example as elements of binder agent carrier fluids evaporate.

For example, layers of build material above the curing zone 306 may be maintained at a temperature below the printing temperature when then heating element 118 is applying heat due to ambient radiant cooling of the upper layers of build material. Similarly, layers of build material below the curing zone 306 may be allowed to cool below the curing temperature of the binder agent due to cooling through the build unit walls 104.

As successive layers of build material are formed and as binder agent is selectively printed on each layer, layers of build material will move into the curing zone 306 causing the layers to be heated to a temperature above the curing temperature of the binder agent, thereby causing any binder agent present to be thermally cured. These layers will then move out of the curing zone 306 causing these layers to cool to a temperature below the curing temperature of the binder agent.

The speed at which layers are moved through the curing zone 118 will depend on the time it takes to process (i.e. to form and selectively print binder agent) on each layer. In one example, a layer processing time may be between 5 and 10 seconds, although in other examples the layer processing time may be faster or slower. In one example, the build platform may be controlled to be lowered to allow the formation of build material layers in the range of about 50 to 150 micrometers, although in other examples other layer thicknesses may be used. The time which build material layers spend in the curing zone 118 may depend on factors such as the height of the curing zone 306, the layer processing time, and the layer thickness.

In one example, to ensure that all layers of build material on which binder agent is printed are thermally cured in the build unit the controller 120 controls the printer 100 to make all layers of build material on which binder agent is printed move through the curing zone 306. For example, the controller 120 may control the printer 100 to, when no more binder agent is to be printed, continue to form successive layers of build material until all layers on which binder agent have been printed enter into the curing zone 306. In one example, the controller 120 continues to form successive layers of build material until all layers on which binder agent have been printed enter and leave the curing zone 306. In this way, all layers on which binder agent are printed spend the substantially the same length of time in the curing zone 306.

In a further example, the controller 120 may control the build platform to move the last printed layers into the curing zone 106 without forming any additional layers of build material thereon, for example by controlling the build platform 108 to lower at a predetermined speed. In one example the predetermined speed may be a speed substantially the same as the speed in which the build platform 108 is lowered during formation of build material layers and selective printing of binder agent thereon.

In another example, the controller 120 may control the build platform 108 to move the last layer on which binder agent was printed into the curing zone and may control the heating element 118 to stop applying heat at a suitable time such that all layers on which binder agent is printed are heating for substantially the same length of time.

In one example, the controller 120 controls the heating element 118 to start applying heat when the build platform 108 is moved in proximity to the heating element 118. In this way, the heating element may not be used during the formation and printing of a set of first layers.

In a further example, shown in Figure 4, a supplementary heating element 402 may be provided to selectively apply heat to upper layers of build material in the build unit 102. In this example, the controller 120 may control the energy source 402 to apply heat to upper layers of build material once all binder agent has been printed to heat up a number of the upper layers of build material to at or above the binder agent curing temperature without having to move those layers of build material into the curing zone 306. In one example, the energy source 402 may be a fixed energy source located above the build chamber 106. In another example, the energy source 402 may be a translatable energy source that may be scanned one or multiple times over the build chamber.

In a yet further example, the build platform 108 may be provided with, or may incorporate, a heating element to apply heat, under control from the controller 120, to build material layers in proximity thereto. In this way, curing of lower layers of build material may be performed when a suitable number of build material layers have been formed thereon.

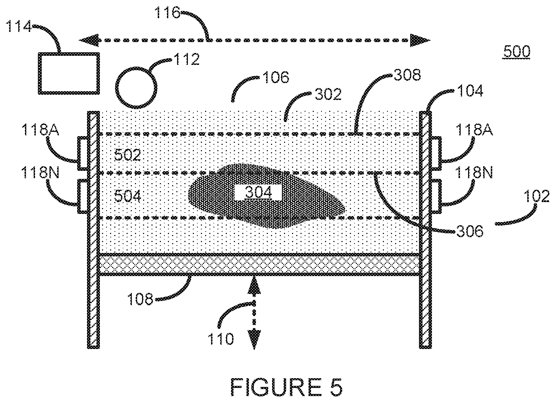

In a still further example, as illustrated in Figure 5, the build unit 102 may be provided with a plurality of horizontally arranged heating elements 118A to 118N. The controller 120 may, in accordance with the heater control instructions 124, control each of the plurality of heating elements 118 to apply different amounts of heat to generate a plurality of zones at different temperatures. For example, the controller 120 may control the temperature of a first drying zone 502 to be at a drying temperature between the boiling point of carrier liquids in the binder agent and the curing temperature of the binder agent, and may control the temperature of a second curing zone 504 to be at or above the curing temperature of the binder agent.

In a further example, a thermal sensor (not shown), such as a thermal camera, may be used to monitor the temperature of the upper layer of build material. In this way, the controller 120 may control the heat output of the heating element(s) 118 to ensure that the temperature of the upper layer of build material remains below the boiling point of carrier fluids in the binder agent.

In a yet further example, a vacuum source may be provided to, draw air through the build platform and/or at least a portion of build chamber, to help remove water vapor and/or solvents formed during printing and curing process.

In one example, the binder agent can include a binder in a liquid carrier or vehicle for application to the particulate build material. For example, the binder can be present in the binding agent at from about 1 wt% to about 50 wt%, from about 2 wt% to about 30 wt%, from about 5 wt% to about 25 wt%, from about 10 wt% to about 20 wt%, from about 7.5 wt% to about 15 wt%, from about 15 wt% to about 30 wt%, from about 20 wt% to about 30 wt%, or from about 2 wt% to about 12 wt% in the binding agent.

In one example, the binder can include polymer particles, such as latex polymer particles. The polymer particles can have an average particle size that can range from about 100 nm to about 1 µm. In other examples, the polymer particles can have an average particle size that can range from about 150 nm to about 300 nm, from about 200 nm to about 500 nm, or from about 250 nm to 750 nm.

In one example, the latex particles can include any of a number of copolymerized monomers, and may in some instances include a copolymerized surfactant, e.g., polyoxyethylene compound, polyoxyethylene alkylphenyl ether ammonium sulfate, sodium polyoxyethylene alkylether sulfuric ester, polyoxyethylene styrenated phenyl ether ammonium sulfate, etc. The copolymerized monomers can be from monomers, such as styrene, p-methyl styrene, α-methyl styrene, methacrylic acid, acrylic acid, acrylamide, methacrylamide, 2-hydroxyethyl acrylate, 2-hydroxyethyl methacrylate, 2-hydroxypropyl acrylate, 2-hydroxypropyl methacrylate, methyl methacrylate, hexyl acrylate, hexyl methacrylate, butyl acrylate, butyl methacrylate, ethyl acrylate, ethyl methacrylate, 2-ethylhexyl acrylate, 2-ethylhexyl methacrylate, propyl acrylate, propyl methacrylate, octadecyl acrylate, octadecyl methacrylate, stearyl methacrylate, vinylbenzyl chloride, isobornyl acrylate, tetrahydrofurfuryl acrylate, 2-phenoxyethyl methacrylate, benzyl methacrylate, benzyl acrylate, ethoxylated nonyl phenol methacrylate, ethoxylated behenyl methacrylate, polypropyleneglycol monoacrylate, isobornyl methacrylate, cyclohexyl methacrylate, cyclohexyl acrylate, t-butyl methacrylate, n-octyl methacrylate, lauryl methacrylate, tridecyl methacrylate, alkoxylated tetrahydrofurfuryl acrylate, isodecyl acrylate, isobornyl methacrylate, isobornyl acrylate, dimethyl maleate, dioctyl maleate, acetoacetoxyethyl methacrylate, diacetone acrylamide, N-vinyl imidazole, N-vinylcarbazole, N-vinyl-caprolactam, or combinations thereof. In some examples, the latex particles can include an acrylic. In other examples, the latex particles can include 2-phenoxyethyl methacrylate, cyclohexyl methacrylate, cyclohexyl acrylate, methacrylic acid, combinations thereof, derivatives thereof, or mixtures thereof. In another example, the latex particles can include styrene, methyl methacrylate, butyl acrylate, methacrylic acid, combinations thereof, derivatives thereof, or mixtures thereof.

It will be appreciated that example described herein can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are examples of machine-readable storage that are suitable for storing a program or programs that, when executed, implement examples described herein. Accordingly, some examples provide a program comprising code for implementing a system or method as claimed in any preceding claim and a machine-readable storage storing such a program. Still further, some examples described herein may be conveyed electronically via any medium such as a communication signal carried over a wired or wireless connection.

## Claims

1. A 3D printing system (100) comprising:
a build material distributor (112);
a binder agent distributor (114);
a controllable heater element (118) to heat a portion of a build chamber (104); and
a controller (120) configured to:
control the build material distributor to form successive layers of build material on a build platform (108) in a build chamber (106) as the build platform is successively lowered;
control (202) the binder agent distributor to selectively print patterns of a thermally curable binder agent on each formed layer in patterns based on a layer of a 3D object to be generated; and
control (204) the heater element to heat a portion of the contents of the build chamber to or above a curing temperature suitable to cure any binder agent present therein whilst maintaining upper layers of the build chamber at or below a lower printing temperature suitable for printing binder agent thereon and allowing build material below the portion to cool below the curing temperature.

2. The 3D printing system of claim 1, wherein the controller is to control the heater element to:
control the heater element to heat the portion of the contents of the build chamber to or above a curing temperature, maintain the upper layers of the build chamber at or below a printing temperature, and cause build material below the upper layers to be at a drying temperature between the curing temperature and the printing temperature.

3. The 3D printing system of claim 1, wherein the curing temperature is at or above about 120 degrees Celsius, and wherein the printing temperature is at or below about 80 degrees Celsius.

4. The 3D printing system of claim 1, wherein the portion of the contents of the build chamber heated to the curing temperature defines a curing zone, and wherein the controller is to move all layers of build material on which binder agent is printed through the curing zone.

5. The 3D printing system of claim 1, further comprising an energy source (402) to apply heat to top layers of build material in the build chamber, and wherein the controller is to control the energy source to apply energy to the last layers of build material on which binder agent is printed on.

6. The 3D printing system of claim 1, further comprising a thermal sensor to measure a temperature of the top layer of build material in the build chamber, the controller to control the heating of the heater element to maintain the temperature of the top layer at or below the printing temperature.

7. The 3D printing system of claim 1, further comprising a build unit, the build unit comprising a build chamber, a build platform, and a heater element to apply heat to a build chamber

8. The 3D printing system of claim 1, further comprising an interface to receive a build unit having a build chamber, a build platform, and a heater element to apply heat to the build chamber.

9. A method of controlling a 3D printing system comprising:
forming successive layers of build material on a build platform in a build chamber;
selectively printing (202) a thermally curable binder agent on each formed layer in accordance with data derived from a 3D object to be generated;
heating (204) a portion of the build chamber to generate:
a curing zone within which build material is heated to a temperature at or above a curing temperature of the binder agent; and
a printing zone at the top of the build chamber within which build material is maintained at or below a printing temperature, wherein the printing temperature is lower than the curing temperature, and
the heating is controlled to allow build material below the portion to cool below the curing temperature.

10. The method of claim 9, further comprising heating the curing zone to a temperature at or above about 120 degrees Celsius, and maintaining the printing zone at temperature at or below about 80 degrees Celsius.

11. The method of claim 9, further comprising moving all layers of build material on which binder agent is printed through the curing zone.

12. The method of claim 11, wherein moving all layers of build material on which agent is printed through the curing zone further comprises controlling the 3D printer to continue to form successive layers of build material on the build platform.

13. The method of claim 9, further comprising, once all binder agent has been printed, applying energy to the top layers of build material to heat them to or above the curing temperature.

## Patentansprüche

1. 3D-Drucksystem (100), umfassend:
einen Baumaterialverteiler (112);
einen Bindemittelverteiler (114); ein steuerbares Heizelement (118) zum Erhitzen eines Abschnitts einer Baukammer (104); und
einen Controller (120), der konfiguriert ist zum:
Steuern des Baumaterialverteilers, um aufeinanderfolgende Schichten von Baumaterial auf einer Bauplattform (108) in einer Baukammer (106) zu bilden, wenn die Bauplattform sukzessive abgesenkt wird;
Steuern (202) des Bindemittelverteilers, um selektiv Muster eines thermisch härtbaren Bindemittels auf jeder gebildeten Schicht in Mustern zu drucken, die auf einer Schicht eines zu erzeugenden 3D-Objekts basieren; und
Steuern (204) des Heizelements, um einen Abschnitt des Inhalts der Baukammer auf oder über eine Aushärtungstemperatur zu erhitzen, die zum Aushärten eines darin vorhandenen Bindemittels geeignet ist, während die oberen Schichten der Baukammer auf oder unter einer niedrigeren Drucktemperatur gehalten werden, die zum Aufdrucken von Bindemittel geeignet ist, und wobei das Baumaterial unter dem Abschnitt unter die Aushärtungstemperatur abkühlen kann.

2. 3D-Drucksystem nach Anspruch 1, wobei der Controller das Heizelement steuert zum:
Steuern des Heizelements, um den Abschnitt des Inhalts der Baukammer auf oder über eine Aushärtungstemperatur zu erhitzen, Halten der oberen Schichten der Baukammer auf oder unter einer Drucktemperatur, und Veranlassen, dass das Baumaterial unter den oberen Schichten eine Trocknungstemperatur zwischen der Aushärtungstemperatur und der Drucktemperatur aufweist.

3. 3D-Drucksystem nach Anspruch 1, wobei die Aushärtungstemperatur bei oder über ungefähr 120 Grad Celsius liegt und wobei die Drucktemperatur bei oder unter ungefähr 80 Grad Celsius liegt.

4. 3D-Drucksystem nach Anspruch 1, wobei der auf die Aushärtungstemperatur erhitzte Abschnitt des Inhalts der Baukammer eine Aushärtungszone definiert, und wobei der Controller alle Schichten des Baumaterials, auf die Bindemittel gedruckt wird, durch die Aushärtungszone bewegen soll.

5. 3D-Drucksystem nach Anspruch 1, ferner umfassend eine Energiequelle (402), um auf die oberen Schichten des Baumaterials in der Baukammer Wärme aufzubringen, und wobei der Controller die Energiequelle so steuern soll, dass er Energie auf die letzten Schichten des Baumaterials aufbringt, auf die das Bindemittel aufgedruckt wird.

6. 3D-Drucksystem nach Anspruch 1, ferner umfassend einen Wärmesensor zum Messen einer Temperatur der oberen Schicht des Baumaterials in der Baukammer, wobei der Controller die Erwärmung des Heizelements steuert, um die Temperatur der oberen Schicht auf oder unter der Drucktemperatur zu halten.

7. 3D-Drucksystem nach Anspruch 1, ferner umfassend eine Baueinheit, wobei die Baueinheit eine Baukammer, eine Bauplattform und ein Heizelement zum Erhitzen einer Baukammer umfasst.

8. 3D-Drucksystem nach Anspruch 1, ferner umfassend eine Schnittstelle zum Aufnehmen einer Baueinheit mit einer Baukammer, einer Bauplattform und einem Heizelement zum Erhitzen der Baukammer.

9. Verfahren zum Steuern eines 3D-Drucksystems, umfassend:
Ausbilden aufeinanderfolgender Schichten eines Baumaterials auf einer Bauplattform in einer Baukammer;
selektives Drucken (202) eines thermisch härtbaren Bindemittels auf jede gebildete Schicht gemäß Daten, die von einem zu erzeugenden 3D-Objekt abgeleitet werden;
Erhitzen (204) eines Abschnitts der Baukammer, um zu erzeugen:
eine Aushärtungszone, innerhalb der Baumaterial auf eine Temperatur bei oder über einer Aushärtungstemperatur des Bindemittels erhitzt wird; und
eine Druckzone an der Oberseite der Baukammer, innerhalb der das Baumaterial auf oder unter einer Drucktemperatur gehalten wird, wobei die Drucktemperatur niedriger ist als die Aushärtungstemperatur, und
wobei das Erhitzen so gesteuert wird, dass das Baumaterial unter dem Abschnitt unter die Aushärtungstemperatur abkühlen kann.

10. Verfahren nach Anspruch 9, ferner umfassend das Erhitzen der Aushärtungszone auf eine Temperatur von oder über ungefähr 120 Grad Celsius und Halten der Druckzone auf einer Temperatur von oder unter ungefähr 80 Grad Celsius.

11. Verfahren nach Anspruch 9, ferner umfassend das Bewegen aller Schichten des Baumaterials, auf die Bindemittel gedruckt wird, durch die Aushärtungszone.

12. Verfahren nach Anspruch 11, wobei das Bewegen aller Schichten des Baumaterials, auf die das Mittel gedruckt wird, durch die Aushärtungszone ferner das Steuern des 3D-Druckers umfasst, um weiterhin aufeinanderfolgende Schichten von Baumaterial auf der Bauplattform zu bilden.

13. Verfahren nach Anspruch 9, ferner umfassend, sobald das gesamte Bindemittel gedruckt wurde, das Aufbringen von Energie auf die oberen Schichten des Baumaterials, um sie auf oder über die Aushärtungstemperatur zu erhitzen.

## Revendications

1. Système d'impression 3D (100) comprenant :
un distributeur de matériau de construction (112) ;
un distributeur d'agent liant (114) ;
un élément de dispositif de chauffage (118) pouvant être commandé pour chauffer une partie d'une chambre de construction (104) ; et
un dispositif de commande (120) configuré pour :
commander le distributeur de matériau de construction pour former des couches successives de matériau de construction sur une plateforme de construction (108) dans une chambre de construction (106) à mesure que la plateforme de construction est successivement abaissée ;
commander (202) le distributeur d'agent liant pour imprimer sélectivement des motifs d'un agent liant thermodurcissable sur chaque couche formée dans des motifs en fonction d'une couche d'un objet 3D à générer ; et
commander (204) l'élément de dispositif de chauffage pour chauffer une partie du contenu de la chambre de construction à une température de durcissement supérieure ou égale à une température de durcissement appropriée pour durcir un quelconque agent liant présent dans celle-ci, tout en maintenant les couches supérieures de la chambre de construction à une température d'impression inférieure ou égale à une température d'impression inférieure appropriée pour imprimer l'agent liant sur celles-ci et en permettant au matériau de construction situé en dessous de la partie de refroidir en dessous de la température de durcissement.

2. Système d'impression 3D selon la revendication 1, dans lequel le dispositif de commande est destiné à commander l'élément de dispositif de chauffage pour :
commander l'élément de dispositif de chauffage pour chauffer la partie du contenu de la chambre de construction à une température de durcissement ou supérieure, maintenir les couches supérieures de la chambre de construction à une température d'impression ou inférieure, et faire en sorte que le matériau de construction sous les couches supérieures soit à une température de séchage entre la température de durcissement et la température d'impression.

3. Système d'impression 3D selon la revendication 1, dans lequel la température de durcissement est égale ou supérieure à environ 120 degrés Celsius, et dans lequel la température d'impression est égale ou inférieure à environ 80 degrés Celsius.

4. Système d'impression 3D selon la revendication 1, dans lequel la partie du contenu de la chambre de construction chauffée à la température de durcissement définit une zone de durcissement, et dans lequel le dispositif de commande est destiné à déplacer toutes les couches de matériau de construction sur lesquelles l'agent liant est imprimé à travers la zone de durcissement.

5. Système d'impression 3D selon la revendication 1, comprenant en outre une source d'énergie (402) permettant d'appliquer de la chaleur aux couches supérieures du matériau de construction dans la chambre de construction, et dans lequel le dispositif de commande est destiné à commander la source d'énergie pour appliquer de l'énergie aux dernières couches du matériau de construction sur lesquelles l'agent liant est imprimé.

6. Système d'impression 3D selon la revendication 1, comprenant en outre un capteur thermique pour mesurer une température de la couche supérieure du matériau de construction dans la chambre de construction, le dispositif de commande étant destiné à commander le chauffage de l'élément de dispositif de chauffage pour maintenir la température de la couche supérieure à la température d'impression ou inférieure.

7. Système d'impression 3D selon la revendication 1, comprenant en outre une unité de construction, l'unité de construction comprenant une chambre de construction, une plateforme de construction et un élément de dispositif de chauffage pour appliquer de la chaleur à la chambre de construction

8. Système d'impression 3D selon la revendication 1, comprenant en outre une interface permettant de recevoir une unité de construction ayant une chambre de construction, une plateforme de construction et un élément de dispositif de chauffage pour appliquer de la chaleur à la chambre de construction.

9. Procédé de commande d'un système d'impression 3D comprenant :
la formation de couches successives de matériau de construction sur une plateforme de construction dans une chambre de construction ;
l'impression sélective (202) d'un agent liant thermodurcissable sur chaque couche formée conformément à des données dérivées d'un objet 3D à générer ;
le chauffage (204) d'une partie de la chambre de construction pour générer :
une zone de durcissement au sein de laquelle le matériau de construction est chauffé à une température égale ou supérieure à une température de durcissement de l'agent liant ; et
une zone d'impression au sommet de la chambre de construction au sein de laquelle le matériau de construction est maintenu à une température d'impression ou inférieure, dans lequel la température d'impression est inférieure à la température de durcissement, et
le chauffage est commandé pour permettre au matériau de construction situé sous la partie de refroidir en dessous de la température de durcissement.

10. Procédé selon la revendication 9, comprenant en outre le chauffage de la zone de durcissement à une température égale ou supérieure à environ 120 degrés Celsius, et le maintien de la zone d'impression à une température égale ou inférieure à environ 80 degrés Celsius.

11. Procédé selon la revendication 9, comprenant en outre le déplacement de toutes les couches de matériau de construction sur lesquelles l'agent liant est imprimé à travers la zone de durcissement.

12. Procédé selon la revendication 11, dans lequel le déplacement de toutes les couches de matériau de construction sur lesquelles l'agent est imprimé à travers la zone de durcissement comprend en outre la commande de l'imprimante 3D pour continuer à former des couches successives de matériau de construction sur la plateforme de construction.

13. Procédé selon la revendication 9 comprenant en outre, une fois que tout l'agent liant a été imprimé, l'application d'énergie aux couches supérieures du matériau de construction pour les chauffer à une température égale ou supérieure à la température de durcissement.
